# EUROPÄISCHE PATENTSCHRIFT

(11) **EP 1 586 209 B1**
(45) Veröffentlichungstag und Bekanntmachung des Hinweises auf die Patenterteilung: **03.05.2006**
(21) Anmeldenummer: 03762447.5
(22) Anmeldetag: 03.07.2003
(51) Int. Cl.: H04Q 7/24, H04Q 3/00, H04M 7/00

(54) **VERMEIDUNG VON TRANSCODIERUNG ODER ABBRUCH BEI NUTZLASTCODIERUNGSWECHSEL IN BESTEHENDEN VERBINDUNGEN**
AVOIDANCE OF TRANSCODING OR INTERRUPTION ON LIVE LOAD CODING EXCHANGE IN EXTANT CONNECTIONS
EVITEMENT DE TRANSCODAGE OU D'INTERRUPTION LORS LE CHANGEMENT DU CODAGE DE LA CHARGE UTILE DANS DES CONNEXIONS PERSISTANTES

(30) Priorität: 09.07.2002 DE 10231027
(43) Veröffentlichungstag der Anmeldung: 19.10.2005
(73) Patentinhaber: SIEMENS AKTIENGESELLSCHAFT, 80333 München (DE)
(72) Erfinder: SCHMITT, Georg, 80805 München (DE); LEIS, Peter, 82377 Penzberg (DE); BELLING, Thomas, 81477 München (DE); PFEIL, Bernhard, 81669 München (DE)
(86) Internationale Anmeldenummer: PCT/DE2003/002223
(87) Internationale Veröffentlichungsnummer: WO 2004/006597

(56) Entgegenhaltungen:
- EP-A- 1 182 840
- WO-A-02/41574
- WO-A-02/052811
- US-A1- 2002 080 797

## Beschreibung

Die Erfindung betrifft Verfahren und Vorrichtungen zur Signalisierung einer Änderung der Codierung einer Nutzdaten-Verbindungsabschnitts- Terminierung an einem Mediagateway von einer Mediagateway-Steuerung an das Mediagateway.

In den ITU-T- Protokollen H.248 und Q.1950 ist die Steuerung von sogenannten "Media Gateways" (=MGWs=Vermittlungseinrichtungen insbesondere in einem zellularen Mobilfunknetz oder Festnetz) durch sogenannte "Media Gateway Controller" (=Mediagatewaysteuerungen =MGCs) spezifiziert. Das Protokoll Q.1950 kommt zusammen mit dem ebenfalls durch die ITU-T spezifizierten BICC Protokoll, Q.1902.4 zur Verwendung. Diese Protokolle sind auch für 3GPP-Anwendungen einsetzbar. Media Gateways verbinden unter anderem Nutzverbindungsabschnitte (zur Übertragung von Nutzdaten wie Sprache, Text, Multimedia) eines Telekommunikationsnetzes, und setzen gegebenenfalls unterschiedliche Codierungen, z.B. Sprachcodierungen wie G.711 oder AMR, ineinander um. Im folgenden wird unter Nutzverbindungsabschnittsterminierung, oder kurz Terminierung, die Terminierung eines Abschnittes einer durch das MGW vermittelten Nutzverbindung z.B. für Sprache oder Multimedia (Ton und Bild) an dieser MGW verstanden. Das MGW sendet und/oder empfängt durch diese Terminierung zur Nutzverbindung gehörende (Nutz-)Daten. Im Sprachgebrauch der Protokolle H.248 und Q.1950 entspricht einer Nutzverbindungsabschnittsterminierung eine sogenannte "Termination".

Die oben genannten Protokolle erlauben es, bestehende Nutzverbindungen zu verändern, z.B. durch die Wahl einer anderen Codierung. Die dabei benutzte Signalisierung zwischen MGC und MGW (Protokolle H.248 und Q.1950) ist so geartet, dass jede Terminierung in das MGW unabhängig von den anderen innerhalb das MGW mit ihr verbundenen Terminierungen verändert wird. Zum Beispiel kann das MGW angewiesen werden, an dieser Terminierung eine andere Codierung zu verwenden, oder keine Daten zu senden und/oder zu empfangen. Das MGW weiß bei der Veränderung einer Terminierung nicht, ob nachfolgend auch andere durch sie mit dieser Terminierung verbundene Terminierungen geändert werden. Deswegen muss das MGW bei der Veränderung einer Terminierung sofort Maßnahmen ergreifen, wenn sich dadurch bei verbundenen Terminierungen (Im Sprachgebrauch der Protokolle H.248 und Q.1950 befinden sich innerhalb einer MGW miteinander verbundene Terminierungen in einem sogenannten gemeinsamen "Context".) unterschiedliche Codierungen ergeben und diese zum Beispiel durch sogenanntes Transcodieren ineinander umzusetzen. In besonderen Fällen soll jedoch die Codierung aller in das MGW miteinander verbundenen Terminierungen, die in demselben "Context" liegen, nahezu zeitgleich verändert werden, zum Beispiel im Rahmen der sogenannten BICC "Codec Modification" oder "Codec Renegotiation" (siehe Q.1902.4), durch die die Codierung von existierenden Sprachverbindungen verändert werden kann. Die 3GPP benutzt die genannten BICC-Prozeduren zusätzlich auch, um bestehende Nutzverbindungen zwischen Sprache und Multimedia (d.h. einer Kombination von Sprache und Bild in einer gemeinsamen Codierung) umzuschalten. Der MGC kann solche Situationen auf Grund der bei ihm eingehenden sogenannten "Call Controll" Signalisierung, z.B. Q.1902.4, erkennen. Da die Signalisierung des MGC an den MGW sequentiell erfolgt, kommt es bei einem nahezu gleichzeitigen Umschalten aller verbundenen Terminierungen innerhalb eines MGW zu einem hier möglicherweise ungewollten Verhalten: Das MGW aktiviert kurzeitig einen Transcoder, der dann fast sofort wieder deaktiviert wird. Dadurch wird unnötige Arbeitslast in einem MGW erzeugt und sein Durchsatz verringert. Es wäre akzeptabel, ist aber bisher technisch nicht möglich, kurzfristig die Verbindung zu unterbrechen. Zusätzlich stellt das MGW bei der Veränderung der ersten Terminierung eventuell fest, dass es die neue Codierung dieser Terminierung nicht in die noch an der/den andere(n) Terminierung (en) verwendete Codierung umsetzen kann. Dies kann zum Beispiel dann passieren, wenn zwischen einer Sprachverbindung und einer Multimediaverbindung oder einer allgemeinen Datenverbindung umgeschaltet wird. Das MGW lehnt deswegen in diesem Falle die Veränderung der Nutzverbindung über H.248/Q.1950 Signalisierung ab.

EP-A-1182840 offenbart ein Verfahren zur Signalisierung eines Befehls zur Änderung der Codierung einer Nutzdatenverbindungsabschittsterminierung eines Mediagateways, derart, dass kein zusätzlicher Befehl dem Mediagateway signalisiert wird, wann eine Prüfung der Verbindbarkeit von Terminierungen durchgeführt werden muss. Diebesaste Prüfung erfolgt hier unmittelbar nach Erhalt der Signalisierung des Befehls.

Aufgabe der vorliegenden Erfindung ist es, eine möglichst effiziente Umschaltung von Codierungen in an einem Mediagateway anliegenden Temrinierungen auf Anweisung eines Mediagatewaycontrollers hin zu ermöglichen, und das umschalten zwischen Codierungen zu ermöglichen, die die Mediagateway nicht ineinander umsetzen kann. Die Aufgabe wird jeweils durch die Gegenstände der unabhängigen Ansprüche gelöst. Erfindungsgemäß kann eine unnötige Arbeitslast durch das kurzfristige Ein- und Ausschalten eines Transcoders in das MGW dadurch vermieden werden, dass der Mediagatewaycontroller das Mediagateway durch geeignete Signalisierung anweist, erst nach Eingang von mehreren Befehlen zur Änderung der Codierung einer Terminierung (und ggf Erhalt eines expliziten Befehls zum Start eines

Vergleichs) eine Prüfung der Verbindbarkeit von Terminierungen durchzuführen (weil das Einschalten eines Transcoders erst nach einem Vergleich erfolgen würde der ergäbe, dass die zu verbindenden/verbundenen Terminierungen während einer Codierungsänderung nicht mehr die gleiche Codierung verwenden, was hier nicht auftritt.) Ein Umschalten zwischen Nutzverbindungen, für die das MGW kein Transcodieren unterstützt, wird ermöglicht. Damit wird unter anderem das Umschalten zwischen Nutzverbindungen für Sprache und Multimedia ermöglicht.

Besonders vorteilhaft sind insbesondere folgende Ausführungsformen:
1. In den H.248 / Q.1950 Protokollen wird bei der Signalisierung zum Verändern einer Terminierung zusätzlich ein oder mehrere Sprachelement (e) verwendet, mit dem die MGC das MGW anweist, erst nach Eingang von Befehlen zur Veränderung mehrerer innerhalb das MGW verbundenen Terminierungen zu überprüfen, ob sie die Terminierungen in ihrer neuen Codierung miteinander verbinden kann.
2. In einer bevorzugten Ausführungsform von 1 leitet das MGW keine Nutzdaten von und zu der betroffenen Terminierungen weiter, nachdem sie einen Befehl zur Veränderung für dieser Terminierung erhalten hat. Nach der unter 1 genannten Überprüfung stellt das MGW die Verbindung zwischen den betroffenen Terminierungen wieder her.
3. In einer bevorzugten Ausführungsform von 1 und 2 kann das MGW die betreffende Terminierung nicht sofort nach Erhalt des Befehls des MGC zur Veränderung isolieren, sondern erst, wenn über eine darauf folgende getrennte Signalisierung mit dem (MGW-) Vermittlungsknoten am anderen Ende des Nutzverbindungsabschnittes das Umschalten der Codierung veranlasst wird. Dadurch wird die Nutzverbindung für einen kürzeren Zeitraum unterbrochen.
4. In einer bevorzugten Ausführungsform von 1 bis 3 kann das MGW die Verbindungen nicht sofort nach der unter 1 genannten Überprüfung wieder herstellen, sondern erst, wenn zusätzlich auch über getrennte Signalisierung mit dem (MGW-)Vermittlungsknoten an den anderen Enden der wieder zu verbindenden Nutzverbindungsabschnitte das Umschalten der Codierung an dieser Terminierungen veranlasst wurde.
5. In einer bevorzugten Ausführungsform von 1 und 2 kann das MGW die ursprünglich verbundenen Terminierungen in ihrer alten Codierung wieder miteinander verbinden, falls das MGW bei der unter 1 genannten Überprüfung feststellt, dass sie die Terminierungen in ihrer neuen Codierung nicht miteinander verbinden kann. Das MGW kann diesen Fehlerfall dem MGC zusätzlich signalisieren.
6. In einer bevorzugten Ausführungsform von 5 kann das MGW die entsprechende Fehlermeldung als Antwort zum Befehl für die Veränderung der letzten Terminierung zum MGC übertragen. Der MGC ist dann in der Lage, in BICC, Q.1902.4, und Q.1950 schon existierende Mechanismen zu nützen, um die Veränderung der Nutzverbindungen abzulehnen.
7. In einer bevorzugten Ausführungsform von 1 und 2 wird als Sprachelement eine Erweiterung der bestehenden Befehle zum Verändern einer Terminierung verwendet.
8. In einer bevorzugten Ausführungsform von 7 soll diese Erweiterung beim ersten entsprechenden Befehl für eine Terminierung enthalten sein. Erst beim Eingang des letzten entsprechenden Befehls für eine verbundene Terminierung soll das MGW überprüfen, ob sie die Terminierungen in ihrer neuen Codierung miteinander verbinden kann. Diese Lösung fügt sich gut in die bestehenden Nachrichtenflüsse von BICC ein. Es sind keine zusätzlichen Nachrichten erforderlich, sondern lediglich neue Sprachelemente innerhalb bestehender Nachrichten.9. In einer bevorzugten Ausführungsform von 8 kann das neue eingeführte Sprachelement in allen Befehlen zur Veränderung von ursprünglich verbundenen Terminierungen enthalten sein. Damit wird die Aufgabe des MGC und das MGW vereinfacht.
10. Alternativ zu 8 kann in einer bevorzugten Ausführungsform von 7 eine Erweiterung im ersten Befehl und optional auch bei weiteren Befehlen zur Veränderung von verbundenen Terminierung enthalten sein. Diese Erweiterung weist die MGW an, solange keine Überprüfung gemäß 1 durchzuführen, bis ein Befehl mit einer zusätzlichen Erweiterung eingeht. Diese zusätzliche Erweiterung weist die MGW an, die Überprüfung gemäß 1 durchzuführen.
11. In einer bevorzugten Ausführungsform von 7 kann das neu eingeführte Sprachelement eine Eigenschaft des sogenannten H.248 "Context" sein.
12. Alternativ zu 11 kann in einer bevorzugten Ausführungsform von 7 das neu eingeführte Sprachelement eine Eigenschaft der sogenannten H.248 "Termination" sein.
13. Alternativ zu 7 kann in einer bevorzugten Ausführungsform von 1 und 2 der MGC durch einen eigenen Befehl eine Terminierung isolieren, bevor der MGC die Codierung an dieser Terminierung verändert. Nachdem der MGC auch an einer oder mehrerer andere ursprünglich verbundener Terminierungen die Codierung verändert hat, kann der MGC die isolierte Terminierung wieder durch einen weiteren eigenen Befehl verbinden,
14. In einer bevorzugten Ausführungsform von 13 kann der MGC eine Terminierung dadurch isolieren, dass er sie in einen anderen sogenannten H.248 "Context" bewegt.
15. In einer bevorzugten Ausführungsform von 13 und 14 kann der MGC die sogenannten Q.1950 Befehle "Isolate" und "Join" verwenden.

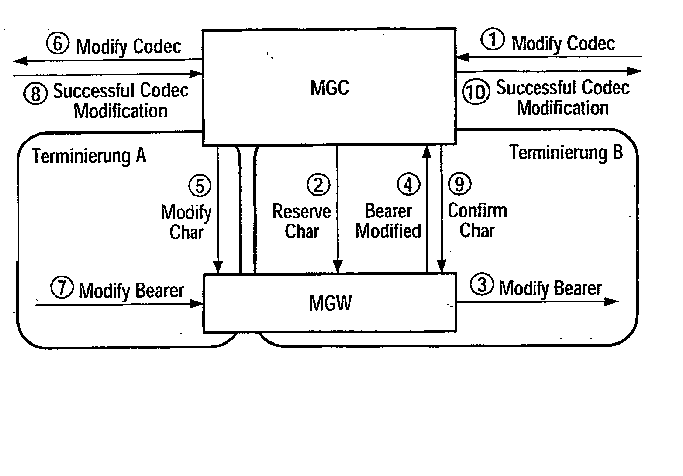

Weitere Merkmale und Vorteile der Erfindung ergeben sich aus den Ansprüchen und der nachfolgenden Beschreibung eines Ausführungsbeispiels anhand der Zeichnung. Dabei zeigt
Fig. 1 beispielhaft den BICC Nachrichtenfluss beim erfindungsgemäßen Umschalten einer Nutzverbindung von einer Codierung zu einer anderen Codierung.

In Figur 1 geben die Zahlen die zeitliche Reihenfolge der durch sie gekennzeichneten Nachrichten an. Nachrichten in den Umrandungen der Elemente "Terminierung A" und "Terminierung B" beziehen sich jeweils auf Nachrichten vom MGC an das MGW, welche die entsprechende Terminierung betreffen, insbesondere die zu ändernde Codierung der entsprechenden Terminierung. Die Nachrichten 2,3,4,5,7 und 9 werden jeweils durch eine (aus Übersichtlichkeitsgründen nicht gezeigte) unmittelbar darauf folgende Nachricht in Gegenrichtung bestätigt. Das MGW ist ein "Media Gateway", also eine Vermittlungseinrichtung in einem Telekommunikationsnetz und kann mit einem oder mehreren weiteren MGW paket- und/oder leitungsvermittelt zur Übertragung von Nutzdaten (Sprache, Text, Multimedia) und/oder Signalisierungsdaten verbunden (3,7) sein.

Das MGC ist eine Steuerung, die das MGW steuert (MGC= "Media Gateway Controller" =Mediagatewaysteuerung) und kann mit einem oder mehreren weiteren MGC zum Senden und Empfangen von Signalisierungsdaten (1,6, 8, 10) verbunden sein.

Die Terminierungen "Terminierung A" und "Terminierung B" (=Nutzverbindung-sabschnittsterminierungen) sind Terminierung eines Abschnittes einer durch das MGW vermittelten Nutzverbindung z.B. für Sprache oder Multimedia (Ton und Bild) an der MGW. Das MGW sendet und/oder empfängt durch diese Terminierung zur Nutzverbindung gehörende (Nutz-)Daten zu/von anderen MGW. Über die Terminierungen "Terminierung A" und "Terminierung B" kommen also jeweils Nutzdaten an und/oder werden jeweils Nutzdaten gesendet.

Im vorliegenden Fall erhält der MGC die Anweisung 1 ("Modify Codec"= Modifziere den Codec), für eine Nutzverbindung die verwendete Kodierung (z.B. Sprach- Codec) zu ändern. Der MGC weiß, dass diese Nutzverbindung von der MGW über die Terminierungen "Terminierung A" und "Terminierung B" in Figur 1 vermittelt wird, und dass er deswegen das MGW anweisen muss diese Terminierungen zu modifizieren. Dafür verwendet der MGC im folgenden die Nachrichten 2 (Q.1950 "Reserve Characteristics") und 5 (Q.1950 "Modify Characteristics") mit neuen Sprachelementen.

Nach Erhalt der Anweisung 1 sendet das MGC an das MGW die Nachricht 2 "Reserve Characteristics". Diese Nachricht 2 enthält einen Befehl (Anweisung) des Mediagatewaycontroller MGC an das Mediagateway MGW, Eigenschaften (nämlich hier die Codierung) einer am Mediagatewy angeschlossenen "Terminierung B" zu ändern. Nach Erhalt der Nachricht 2 sendet das MGW gegebenenfalls über die Verbindung der "Terminierung B" zu einem anderen MGW eine Nachricht 3 "Modify Bearer" (übersetzt: Träger ändern), der dieses andere MGW zur dortigen Änderung von Eigenschaften des Trägers des Nutzverbindungsabschnittes zur "Terminierung B" veranlasst, wie zum Beispiel der Bandbreite. Anschließend bestätigt die MGW zum MGC den Erfolg durch die "Bearer Modified" Nachricht 4.

Ferner sendet nach Erhalt der Anweisung 4 das MGC an das MGW die Nachricht 5 "Modify Characteristics". Diese Nachricht 5 enthält einen Befehl (Anweisung) des Mediagatewaycontroller MGC an das Mediagateway MGW, Eigenschaften (nämlich hier die Codierung) einer am Mediagateway angeschlossenen "Terminierung A" zu ändern. Außerdem erhält das MGW hier über die Verbindung der "Terminierung A" von einem anderen MGW eine Nachricht 7 "Modify Bearer" (übersetzt: Träger ändern), da dieses andere MGW von der geplanten Änderung der Codierung für die Verbindung der "Terminierung B" über die Signalisierung 6 an des MGC ein nicht-gezeigtes MGC/MGW informiert wurde.
Gegebenenfalls erhält das MGC von einem anderen nicht dargestellten MGC eine Nachricht 8 "successfull codec modifcation" (="erfolgreiche Codec-Änderung") betreffend eine erfolgreiche Codec-Änderung im anderen MGC.

Mit der Nachricht 9 "Confirm Chararcteristics" (=Bestätigung der Charakteristik) bestätigt das MGC dem MGW dass es die neuen Charakteristiken (Codecs) behalten soll.

Mit der Nachricht 10 "successfull codec modifcation" (="erfolgreiche Codec-Änderung") betreffend eine erfolgreiche Codec-Änderung im dargestellten MGW bestätigt das MGC einem (nicht dargestellten) anderen MGC eine erfolgreiche Codec-Änderung (im dargestellten MGW)

Erfindungsgemäß kann der beschriebene Nachrichtenfluss wie folgt genutzt und/oder modifiziert werden. Es werden drei alternative Verfahren a) bis c) beschrieben:
a) Verfahren gemäß der Punkte 1 bis 9 sowie 11 und 12 oben: Der MGC weist die MGW in der Nachricht 2 mittels eines neuen Sprachelementes an, erst nach Erhalt von Befehlen für alle verbundenen Terminierungen (hier Nachrichten 2 und 5) eine Überprüfung auf ein nötiges Transkodieren durchzuführen, und falls nötig einen Transkoder einzufügen. Beim Versenden der Nachricht 3 isoliert das MGW die Terminierung B, über die Terminierung B können also vorerst keine Nutzdaten übermittelt werden. Nach Eingang der Nachricht 5 stellt die MGW fest, dass jetzt für alle Terminierungen Befehle eingegangen sind. Die MGW überprüft daraufhin, ob in der neuen Codierung eine Verbindung der Terminierungen A und B möglich ist. Falls dies nicht möglich ist, sendet das MGW in der Empfangsbestätigung zu 5 eine entsprechende Fehlermeldung. Die weitere Fehlersignalisierung ist hier nicht dargestellt. Andernfalls verbindet das MGW unter Verwendung der neuen Codierung die Terminierungen A und B nach Eingang der Nachricht 7 wieder.
b) Verfahren gemäß der Punkte 1 bis 7 sowie 10 bis 12 oben: Der MGC weist die MGW in der Nachricht 2 mittels eines neuen Sprachelementes an, erst nach Erhalt eines entsprechend gekennzeichneten Befehls für eine verbundene Terminierung eine Überprüfung auf ein nötiges Transkodieren durchzuführen, und falls nötig einen Transkoder einzufügen. Beim Versenden der Nachricht 3 isoliert das MGW die Terminierung B, über die Terminierung B können also vorerst keine Nutzdaten übermittelt werden. In der Nachricht 5 weist der MGC die MGW mittels eines weiteren neuen Sprachelementes an, die genannte Überprüfung durchzuführen. Die MGW überprüft daraufhin, ob in der neuen Codierung eine Verbindung der Terminierungen A und B möglich ist. Falls dies nicht möglich ist, sendet das MGW in der Empfangsbestätigung zu 5 eine entsprechende Fehlermeldung. Die weitere Fehlersignalisierung ist hier nicht dargestellt. Andernfalls verbindet das MGW unter Verwendung der neuen Codierung die Terminierungen A und B nach Eingang der Nachricht 7 wieder.
·c) Verfahren gemäß der Punkte 1 bis 6 sowie 13 bis 15 oben: Der MGC weist die MGW unmittelbar vor Senden der Nachricht 2 mittels der zusätzlichen, nicht dargestellten Nachricht "Isolate" an, die Terminierung B zu isolieren. Daraufhin leitet die MGE keine Nutzdaten zur Terminierung B weiter und empfängt von dort auch keine Nutzdaten. Beim Erhalt der Nachricht 2 überprüft die MGW nicht, ob zur Terminierung A hin ein Transkodieren nötig ist, da die beiden Terminierungen nicht verbunden sind. Nach Erhalt der Bestätigung der Nachricht 5 , und vor Senden der Nachricht 6, weist der MGC die MGW mittels der zusätzlichen, nicht dargestellten Nachricht "Join" an, die Terminierung B mit der Terminierung A zu verbinden. Die MGW überprüft daraufhin, ob in der neuen Codierung eine Verbindung der Terminierungen A und B möglich ist. Falls dies nicht möglich ist, sendet das MGW in der Empfangsbestätigung zu 5 eine entsprechende Fehlermeldung.

Die weitere Fehlersignalisierung ist hier nicht dargestellt. Andernfalls verbindet das MGW unter Verwendung der neuen Codierung die Terminierungen A und B nach Eingang der Nachricht 7 wieder. Alternativ zu dem oben gesagten können sich die zusätzlichen Nachrichten "Isolate" und "Join" auch jeweils auf die Terminierung A beziehen.

## Patentansprüche

1. Verfahren zur Signalisierung eines Befehls (2) zur Änderung der Codierung einer Nutzdaten-Verbindungsabschnitts-Terminierung eines Mediagateways (MGW) von einer Mediagateway-Steuerung (MGC) an das Mediagateway (MGW), **dadurch gekennzeichnet dass** von der Mediagateway-Steuerung (MGC) an das Mediagateway (MGW) auch ein Befehl (2) signalisiert wird, erst zeitlich nach Eingang von mehreren Befehlen (2;5) zur Änderung der Codierung jeweils mindestens einer Terminierung (Terminierung A, Terminierung B) eine Prüfung der Verbindbarkeit von Terminierungen (Terminierung A, Terminierung B) durchzuführen.

2. Verfahren nach Anspruch 1, **dadurch gekennzeichnet, dass** das Mediagateway (MGW) keine Nutzdaten von und zu einer betroffenen Terminierung mehr übermittelt, nachdem es einen Befehl zur Veränderung für dieser Tertninierung erhalten hat, bis die genannte Prüfung der Verbindbarkeit von Terminierungen erfolgt ist.

3. Verfahren nach einem der vorhergehenden Ansprüche, **dadurch gekennzeichnet, dass** das Mediagateway (MGW) von der Mediagateway-Steuerung (MGC) einen Befehl (in 2) erhält, mit der Prüfung der Verbindbarkeit von Terminierungen (Terminierung A, Terminierung B) zu warten, bis das Mediagateway (MGW) von der Mediagateway-Steuerung (MGC) mindestens einen Befehl (in 5) zur Änderung der Codierung einer anderen verbundenen Terminierung (Terminierung A) erhält.

4. Verfahren nach einem der vorhergehenden Ansprüche, **dadurch gekennzeichnet, dass** das Mediagateway (MGW) mit der Prüfung erst dann beginnt, wenn es für alle verbundenen Terminierungen Befehle (2 und 5) erhalten hat, dies Terminierungen zu modifizieren.

5. Verfahren nach einem der vorhergehenden Ansprüche, **dadurch gekennzeichnet, dass** das Mediagateway (MGW) mit der Prüfung erst dann beginnt, wenn es einen Befehl (in 5) erhält, mit der Prüfung der Verbindbarkeit von Terminierungen zu beginnen.

6. Verfahren nach einem der vorhergehenden Ansprüche, **dadurch gekennzeichnet, dass** dem Mediagateway (MGW) der Befehl (in 2), mit der Prüfung der Verbindbarkeit von Terminierungen zu warten, in einer Nachricht (2; 3) signalisiert wird, in welcher dem Mediagateway (MGW) mitgeteilt wird, dass es für mindestens eine (Terminierung B; Terminierung A) Terminierung am Mediagateway (MGW) die Codierung ändern soll.

7. Verfahren nach einem der vorhergehenden Ansprüche, **dadurch gekennzeichnet, dass** das MGW die betreffende Terminierung nicht sofort nach Erhalt des Befehls des MGC zur Veränderung isoliert, sondern erst, wenn über eine darauf folgende getrennte Signalisierung mit dem (MGW-)Vermittlungsknoten am anderen Ende des Nutzverbindungsabschnittes das Umschalten der Codierung veranlasst wird.

8. Verfahren nach einem der vorhergehenden Ansprüche, **dadurch gekennzeichnet, dass** das MGW die Verbindungen nicht sofort nach der unter 1 genannten Überprüfung wieder herstellen, sondern erst, wenn zusätzlich auch über getrennte Signalisierung mit dem (MGW-) Vermittlungsknoten an den anderen Enden der wieder zu verbindenden Nutzverbindungsabschnitte das Umschalten der Codierung an dieser Terminierungen veranlasst wurde.

9. Verfahren nach einem der vorhergehenden Ansprüche, **dadurch gekennzeichnet, dass** das MGW die ursprünglich verbundenen Terminierungen (Terminierung A, Terminierung B) in ihrer alten Codierung wieder miteinander verbindet, falls das MGW bei der unter 1 genannten Überprüfung feststellt, dass es die Terminierungen in ihrer neuen Codierung nicht miteinander verbinden kann.

10. Verfahren nach einem der vorhergehenden Ansprüche, **dadurch gekennzeichnet, dass** das MGW eine Fehlermeldung als Antwort zum Befehl für die Veränderung der letzten Terminierung zum MGC überträgt, und das MGC dann in BICC, Q.1902.4, existierende Mechanismen nützt, um die Veränderung der Nutzverbindungen abzulehnen.

11. Verfahren nach einem der vorhergehenden Ansprüche, **dadurch gekennzeichnet, dass** als Sprachelement für einen im Anspruch 1 genannten Befehl (2;5) mit der Prüfung zu warten eine Erweiterung bestehender Befehle zum Verändern einer Terminierung verwendet wird.

12. Verfahren nach Anspruch 10, **dadurch gekennzeichnet, dass** das Sprachelement eine Eigenschaft des sogenannten H.248 "Context" ist.

13. Verfahren nach Anspruch 10, **dadurch gekennzeichnet, dass** das Sprachelement eine Eigenschaft der sogenannten H.248 "Termination" ist.

14. Verfahren nach einem der vorhergehenden Ansprüche, **dadurch gekennzeichnet, dass** der MGC durch einen eigenen Befehl eine Terminierung isoliert, bevor der MGC die Codierung an dieser Terminierung verändert und nachdem der MGC auch an einer oder mehrerer andere ursprünglich verbundener Terminierungen die Codierung verändert hat, der MGC die isolierte Terminierung wieder durch einen weiteren eigenen Befehl verbindet.

15. Verfahren nach einem der vorhergehenden Ansprüche, **dadurch gekennzeichnet, dass** der MGC eine Terminierung **dadurch** isoliert, dass er sie in einen anderen sogenannten H.248 "Context" bewegt.

16. Verfahren nach einem der vorhergehenden Ansprüche, **dadurch gekennzeichnet, dass** der MGC die sogenannten Q.1950 Befehle "Isolate" und "Join" verwendet.

17. Verfahren nach einem der vorhergehenden Ansprüche, **dadurch gekennzeichnet, dass** eine Terminierung eine Terminierung eines Nutzdaten-Verbindungsabschnitts des Telekommunikationsnetzes ist, die am Mediagateway endet.

18. Vorrichtung zur Durchführung des Verfahrens nach einem der vorhergehenden Ansprüche.

## Claims

1. Method for signalling an instruction (2) to modify the coding of a user data connection section termination of a media gateway (MGW) from a media gateway controller (MGC) to the media gateway (MGW), **characterised in that** an instruction (2) is also signalled from the media gateway controller (MGC) to the media gateway (MGW) that verification of the connectability of terminations (Termination A, Termination B) should only be implemented after receipt of a plurality of instructions (2; 5) to modify the coding of at least one termination (Termination A, Termination B) respectively.

2. Method according to claim 1,
**characterised in that** the media gateway (MGW) no longer transmits user data from and to a relevant termination once it has received a modification instruction for this termination, until the specified verification of the connectability of terminations has taken place.

3. Method according to one of the preceding claims,
**characterised in that** the media gateway (MGW) receives an instruction (in 2) from the media gateway controller (MGC) to hold the verification of the connectability of terminations (Termination A, Termination B) until the media gateway (MGW) receives at least one instruction (in 5) from the media gateway controller (MGC) to modify the coding of another connected termination (Termination A).

4. Method according to one of the preceding claims,
**characterised in that** the media gateway (MGW) only starts the verification when it has received instructions (2 and 5) for all the connected terminations to modify said terminations.

5. Method according to one of the preceding claims,
**characterised in that** the media gateway (MGW) only starts the verification when it receives an instruction (in 5) to start the verification of the connectability of terminations.

6. Method according to one of the preceding claims,
**characterised in that** the instruction (in 2) to hold the verification of the connectability of terminations is signalled to the media gateway (MGW) in a message (2; 3), in which the media gateway (MGW) is informed that it should modify the coding for at least one (Termination A, Termination B) termination at the media gateway (MGW).

7. Method according to one of the preceding claims,
**characterised in that** the MGW does not isolate the relevant termination immediately after receipt of the modification instruction from the MGC but waits until switching of the coding is prompted via a subsequent separate signalling with the (MGW) switching node at the other end of the user connection section.

8. Method according to one of the preceding claims,
**characterised in that** the MGW does not restore the connections immediately after the verification specified in 1 but waits until switching of the coding at said terminations has also been prompted via separate signalling with the (MGW) switching node at the other ends of the user connection sections to be reconnected.

9. Method according to one of the preceding claims,
**characterised in that** the MGW reconnects the originally connected terminations (Termination A, Termination B) in their old coding, if the MGW determines during the verification specified in 1 that it cannot connect the terminations to each other in their new coding.

10. Method according to one of the preceding claims,
**characterised in that** the MGW transmits an error message to the MGC in response to the instruction to modify the last termination and the MGC then uses mechanisms existing in BICC, Q.1902.4, to reject the modification of the user connections.

11. Method according to one of the preceding claims,
**characterised in that** an extension of existing instructions to modify a termination is used as the voice element for an instruction (2; 5) as specified in claim 1 to hold the verification.

12. Method according to claim 10,
**characterised in that** the voice element is a characteristic of the so-called H.248 context.

13. Method according to claim 10,
**characterised in that** the voice element is a characteristic of the so-called H.248 termination.

14. Method according to one of the preceding claims,
**characterised in that** the MGC isolates a termination by means of a specific instruction, before the MGC modifies the coding at said termination and after the MGC has also modified the coding at one or a plurality of other originally connected terminations, the MGC reconnects the isolated termination by means of a further specific instruction.

15. Method according to one of the preceding claims,
**characterised in that** the MGC isolates a termination by moving it to another so-called H.248 context.

16. Method according to one of the preceding claims,
**characterised in that** the MGC uses the so-called Q.1950 instructions "Isolate" and "Join".

17. Method according to one of the preceding claims,
**characterised in that** a termination is a termination of a user data connection section of the telecommunication network, which ends at the media gateway.

18. Device for implementing the method according to one of the preceding claims.

## Revendications

1. Procédé de signalisation d'une instruction (2) de modifier le codage d'une terminaison de section de connexion de données utiles d'une passerelle média (MGW), d'une commande de passerelle média (MGC) à la passerelle média (MGW), **caractérisé en ce qu'**une instruction (2) est également signalée par la commande de passerelle média (MGC) à la passerelle média (MGW) d'exécuter un contrôle de la possibilité de connecter des terminaisons (terminaison A, terminaison B) seulement temporellement après l'entrée de plusieurs instructions (2;5) de modifier le codage de respectivement au moins une terminaison (terminaison A, terminaison B).

2. Procédé selon la revendication 1, **caractérisé en ce que** la passerelle média (MGW) ne transmet plus de données utiles, d'une terminaison concernée et vers une terminaison concernée, après qu'elle ait reçu une instruction de modifier cette terminaison, jusqu'à ce que ledit contrôle de la possibilité de connecter des terminaisons ait été effectué.

3. Procédé selon l'une quelconque des revendications précédentes, **caractérisé en ce que** la passerelle média (MGW) reçoit une instruction (dans 2) de la commande de passerelle media (MGC) d'attendre d'effectuer le contrôle de la possibilité de connecter des terminaisons (terminaison A, terminaison B) jusqu'à ce que la passerelle média (MGW) ait reçu de la commande de passerelle média (MGC) au moins une instruction (dans 5) de modifier le codage d'une autre terminaison connectée (terminaison A).

4. Procédé selon l'une quelconque des revendications précédentes, **caractérisé en ce que** la passerelle média (MGW) ne commence le contrôle que lorsqu'elle a reçu des instructions (2 et 5) pour toutes les terminaisons connectées de modifier ces terminaisons.

5. Procédé selon l'une quelconque des revendications précédentes, **caractérisé en ce que** la passerelle média (MGW) ne commence le contrôle que lorsqu'elle a reçu une instruction (dans 5) de commencer le contrôle de la possibilité de connecter des terminaisons.

6. Procédé selon l'une quelconque des revendications précédentes, **caractérisé en ce que** l'instruction (dans 2), d'attendre d'effectuer le contrôle de la possibilité de connecter des terminaisons, est signalée à la passerelle média (MGW) dans un message (2; 3), dans lequel il est communiqué à la passerelle média (MGW) qu'elle doit modifier le codage sur la passerelle média (MGW) pour au moins une (terminaison B, terminaison A) terminaison.

7. Procédé selon l'une quelconque des revendications précédentes, **caractérisé en ce que** la MGW n'isole la terminaison concernée pas immédiatement après la réception de l'instruction de la MGC d'effectuer la modification, mais seulement lorsque, par l'intermédiaire d'une signalisation consécutive séparée, la commutation du codage est ordonnée au moyen du noeud de commutation (de la MGW) sur l'autre extrémité de la section de connexion utile.

8. Procédé selon l'une quelconque des revendications précédentes, **caractérisé en ce que** la MGW ne rétablit les connexions pas immédiatement après le contrôle mentionné sous 1 mais seulement lorsque, en plus, la commutation du codage sur ces terminaisons a été ordonnée aux autres extrémités des sections de connexion utile à connecter à nouveau, également,par l'intermédiaire d'une signalisation séparée au moyen du noeud de commutation (de la MGW).

9. Procédé selon l'une quelconque des revendications précédentes, **caractérisé en ce que** la MGW connecte les terminaisons initialement connectées (terminaison A, terminaison B) à nouveau dans leur ancien codage au cas où la MGW constate lors du contrôle mentionné sous 1 qu'elle ne peut pas connecter entre elles les terminaisons dans leur nouveau codage.

10. Procédé selon l'une quelconque des revendications précédentes, **caractérisé en ce que** la MGW transmet à la MGC un message d'erreur en réponse à l'instruction de modifier la dernière terminaison et **en ce que** la MGC exploite alors les mécanismes existant en BICC, Q.1902.4 afin de refuser la modification des connexions utiles.

11. Procédé selon l'une quelconque des revendications précédentes, **caractérisé en ce qu'**une extension d'instructions existantes de modifier une terminaison est utilisée comme élément vocal pour une instruction (2;5)d'attendre d'effectuer le contrôle mentionnée dans la revendication 1.

12. Procédé selon la revendication 10, **caractérisé en ce que** l'élément vocal est une propriété du dit « Context » H.248.

13. Procédé selon la revendication 10, **caractérisé en ce que** l'élément vocal est une propriété de ladite « Termination » H.248.

14. Procédé selon l'une quelconque des revendications précédentes, **caractérisé en ce que** la MGC isole une terminaison au moyen d'une propre instruction, avant que la MGC ait modifié le codage sur cette terminaison et après que la MGC ait modifié le codage également sur une ou plusieurs autres terminaisons initialement connectées, **en ce que** la MGC connecte à nouveau la terminaison isolée au moyen d'une autre propre instruction.

15. Procédé selon l'une quelconque des revendications précédentes, **caractérisé en ce que** la MGC isole une terminaison du fait qu'elle la déplace dans un autre dit « Context » H.248.

16. Procédé selon l'une quelconque des revendications précédentes, **caractérisé en ce que** la MGC utilise lesdites instructions Q.1950 « Isolate » et « Join ».

17. Procédé selon l'une quelconque des revendications précédentes, **caractérisé en ce qu'**une terminaison est une terminaison d'une section de connexion de données utiles du réseau de télécommunication, qui se termine à la passerelle média.

18. Dispositif pour la réalisation du procédé selon l'une quelconque des revendications précédentes.
